# EUROPÄISCHE PATENTSCHRIFT

(11) **EP 2 364 596 B1**
(45) Veröffentlichungstag und Bekanntmachung des Hinweises auf die Patenterteilung: **21.08.2013**
(21) Anmeldenummer: 11153505.0
(22) Anmeldetag: 07.02.2011
(51) Int. Cl.: A22C 11/10, A22C 11/00

(54) **Vorrichtung und Verfahren zum Trennen von Wurstketten**
Method and device for separating sausage chains
Dispositif et procédé destinés à la séparation de chaînes de saucisses

(30) Priorität: 12.03.2010 DE 102010002827
(43) Veröffentlichungstag der Anmeldung: 14.09.2011
(73) Patentinhaber: Albert Handtmann Maschinenfabrik GmbH & Co. KG, 88400 Biberach (DE)
(72) Erfinder: Baechtle, Manfred, 88433, Schemmerhofen (DE); Flach, Jürgen, 89611, Obermarchtal (DE); Schmid, Klaus, 88499, Riedlingen (DE)
(74) Vertreter: Grünecker, Kinkeldey, Stockmair & Schwanhäusser

(56) Entgegenhaltungen:
- US-A- 4 104 763
- US-A- 5 147 239

## Beschreibung

Die Erfindung betrifft ein Verfahren und eine Vorrichtung zum Vereinzeln von Wurstketten.

Bei der Vereinzelung von Wurstketten in einzelne Würste werden unterschiedliche Verfahren verwendet.

In der DE 4 307 637 wurde bereits beschrieben die Wurstkette zwischen zwei Transporteinrichtungen zu durchtrennen. Nachteilig bei diesem Verfahren ist das Trennen zwischen den Transporteinrichtungen. Durch die beim Trennen auftretende Querkraft auf die Trennstelle der Wurst kann diese seitlich ausgelenkt werden, d.h. sie kann auf eine Kante der zweiten Transporteinrichtung stoßen und dabei beschädigt werden. Auch ist es möglich, dass sich der ganze Wurststrang verkeilt und die Maschine gestoppt werden muss, um den Störfall zu beheben. Desweiteren ist es sehr schwierig, sehr kurze Wurstprodukte zu durchtrennen, da diese getrennt werden müssen, ohne dass sie durch die zweite Transporteinrichtung sauber gehalten werden.

In der DE 19802101 wird ein Verfahren zum Trennen von Wurstketten beschrieben, bei welchem nur eine Transporteinrichtung verwendet wird. Die Abteilstelle wird vor der Transporteinrichtung erzeugt. Die Würste liegen jedoch dicht aneinander. Vor allem bei der Herstellung von Naturdarmprodukten ist es sehr schwierig, eine entsprechende Lücke zwischen den Würsten herzustellen, so dass die Würste an der Lücke ordnungsgemäß durchtrennt werden können. Die Herstellung einer Lücke gelingt nur, wenn die Darmbremse fest angezogen ist, was jedoch wiederum eine hohe Darmbelastung bewirkt. Dies kann zu Darmplatzern und somit zu Störungen führen.

US 4 104 763 beschreibt ein Verfahren gemäß dem Oberbegriff des Anspruchs 1 und eine Vorrichtung gemäß dem Oberbegriff des Anspruchs 6.

Hiervon ausgehend liegt der vorliegenden Erfindung die Aufgabe zugrunde, eine Vorrichtung und ein Verfahren bereitzustellen, mit denen auf zuverlässige und einfache Art und Weise Wurstketten in Einzelwürste unterteilt werden können, ohne dass es zu Störungen beim Durchtrennen der Abteilstelle oder zu Darmplatzern kommt.

Erfindungsgemäß wird diese Aufgabe durch die Merkmale der Ansprüche 1 und 6 gelöst.

Gemäß der vorliegenden Erfindung kann also die Abteilstelle zwischen zwei hintereinander angeordneten Würsten vergrößert werden, indem die Transportgeschwindigkeit der zweiten Transporteinrichtung zumindest zeitweise größer ist, als die Transportgeschwindigkeit der ersten Transporteinrichtung. Durch das Vergrößern der Abteilstelle, d.h. das Erzeugen einer größeren Lücke zwischen zwei hintereinander angeordneten Würsten können die Würste einfacher mit Hilfe einer entsprechenden Trenneinrichtung voneinander getrennt werden. Vorteilhaft bei diesem Verfahren ist, dass die Lücke zum Trennen nicht durch ein starkes Bremsen, d.h. ein Zurückhalten der Wursthülle in der Darmbremse erzeugt wird und somit weniger Darmplatzer entstehen. Die Darmbremse muss also weniger fest eingestellt werden. Dadurch, dass die Abteilstelle in der zweiten Transporteinrichtung durchtrennt wird, ergibt sich der Vorteil, dass beim Trennvorgang die Würste durch die zweite Transporteinrichtung festgehalten werden, so dass die beim Trennen auftretende Querkraft die Wurst seitlich nicht auslenkt. Die Wurst bleibt also auch beim Durchtrennen stabil in ihrer Bahn. Beim Trennen gibt es also keine Kollisionsstellen und ein sauberes Durchtrennen und störungsfreies Arbeiten ist möglich. Auch sehr kurze Wurstprodukte können zuverlässig getrennt werden, da sie durch das zweite Transportband sauber gehalten werden können. Insgesamt kann somit also auch das Fülltempo und daher die effektive Leistung erhöht werden.

Gemäß einer bevorzugten Ausführungsform wird die Transportgeschwindigkeit der zweiten Transporteinrichtung kurzzeitig erhöht und/oder die Transportgeschwindigkeit der ersten Transporteinrichtung kurzzeitig erniedrigt, wenn sich die Abteilstelle zwischen den Transporteinrichtungen befindet. Die Transportgeschwindigkeit der ersten und/oder zweiten Transporteinrichtung wird also so lange geändert, bis eine vorab bestimmte gewünschte Lücke zwischen den Würsten erzeugt ist. Dann können die Transporteinrichtungen wieder mit ihrer entsprechenden Transportgeschwindigkeit laufen, bis sich die nächste Abteilstelle zwischen den Transporteinrichtungen befindet. Es ist jedoch auch möglich, dass sich die zweite Transporteinrichtung durchwegs etwas schneller als die erste Transporteinrichtung bewegt.

Gemäß der vorliegenden Erfindung wird die Abteilstelle dabei derart vergrößert, dass der Abstand der Mittelpunkte M1, M2 hintereinander liegender Würste um 1 - 8 mm größer ist als der Abstand d1 vor der Vergrößerung. Das bedeutet, dass tatsächlich eine Lücke zwischen den Würsten erzeugt wird, die dazu dient, dass die Würste einfacher durchtrennt werden können.

Gemäß einer bevorzugten Ausführungsform kann die Position einer Abteilstelle vor der Trennstelle mittels Sensor bestimmt werden. Somit kann die Trenneinrichtung gezielt angesteuert werden und in Abhängigkeit des Sensorsignals zum korrekten Zeitpunkt die Abteilstelle durchtrennen, wenn diese die Trennstelle passiert. Es ist jedoch auch möglich, dass die Systemsteuerung rechnerisch ermittelt, wann sich die Abteilstelle an der Trennstelle befindet. Die Steuerung kann dies aufgrund bekannter Parameter ermitteln, wie Transportgeschwindigkeit der ersten Transporteinrichtung, Transportgeschwindigkeit der zweiten Transporteinrichtung, Zeitpunkt und Stelle, an der die Abteilstelle erzeugt wird.

Gemäß einer bevorzugten Ausführungsform kann auch ermittelt werden, wann sich eine Abteilstelle zwischen den Transportmitteln befindet, wobei dann die Transportgeschwindigkeit der ersten und/oder der zweiten Transporteinrichtung entsprechend verändert wird. Diese Ermittlung kann entweder rechnerisch von einer Steuereinheit aufgrund bekannter Parameter, wie etwa Transportgeschwindigkeit der ersten Transporteinrichtung Zeitpunkt und Stelle, an der die Abdrehstelle erzeugt wird, ermittelt werden, oder aber mittels Sensor.

Eine Vorrichtung zum Durchführen des Verfahrens weist eine erste und zweite Transporteinrichtung auf sowie eine Trenneinrichtung in der zweiten Transporteinrichtung. Ferner weist eine entsprechende Vorrichtung vorzugsweise eine Steuerung auf, die die Transporteinrichtungen derart ansteuert, dass die Transportgeschwindigkeit der ersten und zweiten Transporteinrichtung zumindest zeitweise unterschiedlich ist, derart, dass die Abteilstelle zwischen zwei nebeneinander geordneten Würsten vergrößert wird.

Die erste und zweite Transporteinrichtung umfassen jeweils gegenüberliegende umlaufende Transportmittel, insbesondere gegenüberliegende umlaufende Bänder. Somit können die transportierten Würste gut von oben und unten gehalten und transportiert werden und sind somit auch beim Durchtrennen der Abteilstelle gegen ein Verschieben und Auslenken geschützt.

Vorteilhafterweise ist ein Sensor zum Detektieren der Abteilstelle in einem Bereich von 50 bis 400 mm vor der Trenneinrichtung angeordnet. Die Trenneinrichtung kann dann in Abhängigkeit eines Sensorsignals angesteuert werden. Dies ist insbesondere bei hohem Fülltempo vorteilhaft.

Der Abstand zwischen den Fördereinrichtungen kann sehr klein ausgelegt werden und liegt vorzugsweise in einem Bereich von 1 - 5 mm. Das ist insbesondere bei der Herstellung von sehr kurzen Würsten vorteilhaft, da diese ausreichend durch die beiden Transporteinrichtungen gestützt werden. Ein entsprechend kurzer Abstand ist möglich weil kein Funktionselement, wie z.B. Trennmesser in diesem Bereich angeordnet ist.

Die Steuereinrichtung kann so ausgelegt werden, dass die Geschwindigkeit der zweiten Transporteinrichtung kurzzeitig erhöht und/oder die Geschwindigkeit der ersten Transporteinrichtung kurzzeitig erniedrigt wird, insbesondere, wenn eine Abteilstelle zwischen den Transporteinrichtungen liegt.

Es ist auch möglich, dass die Steuereinrichtung eine Steuereinheit umfasst, die ermittelt, wenn eine Abteilstelle zwischen den Transporteinrichtungen liegt. Alternativ kann auch hier ein Sensor vorgesehen sein.

Nachfolgend wird die vorliegende Erfindung unter Bezugnahme der nachfolgenden Figuren näher erläutert.
- Fig. 1: ist eine schematische Darstellung einer Wurstfüllmaschine mit einer erfindungsgemäßen Einrichtung zum Trennen einer Wurstkette.
- Fig. 2: ist ein schematischer Längsschnitt durch eine erfindungsgemäße Vorrichtung zum Trennen von Wurstketten.
- Fig. 3: zeigt schematisch die Würste nach und vor dem Vergrößern der Abteilstelle.
- Fig. 4: ist ein Schnitt entlang der Linie K-K der Figur 2.
- Fig. 5: zeigt schematisch eine zu der in Fig. 4 gezeigten alternativen Trenneinrichtung.

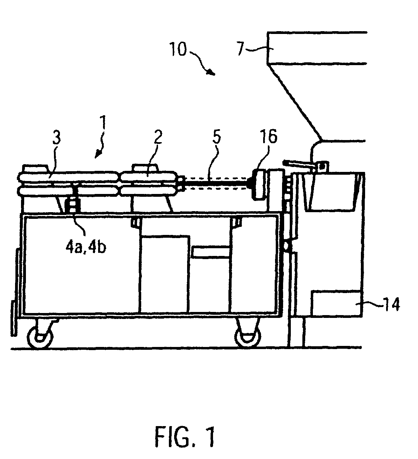

Figur 1 zeigt schematisch die Gesamtansicht einer Füllmaschine 10, die eine Vorrichtung zum Trennen einer Wurstkette 1 umfasst. Die Füllmaschine weist dabei einen Einfülltrichter 7 für das Wurstbrät auf. Mit 5 ist ein Füllrohr bezeichnet, durch das das Wurstbrät mit Hilfe einer Fördereinrichtung, insbesondere einer Flügelzellenpumpe über das Füllrohr 5 in eine Wursthülle ausgeschoben werden kann. Mit 6 ist eine Darmbremse bezeichnet, über die beispielsweise eine über dem Füllrohr 5 geraffte Wursthülle geführt und gespannt werden kann. Durch Ausstoßen des Füllgutes, d.h. des Wurstbräts, kann die Wursthülle so in Transportrichtung von dem Füllrohr gezogen werden. Mit 16 ist ein Abdrehgetriebe bezeichnet, zur Bildung einer Abteilstelle bzw. Abdrehstelle zwischen einzelnen Würsten. Das bedeutet, dass das Füllrohr 5 zusammen mit der Darmbremse um die Achse A drehbar ist, und durch Gegenhalten der Wurst über die Transporteinrichtung 2 eine Abdrehstelle erzeugt werden kann.

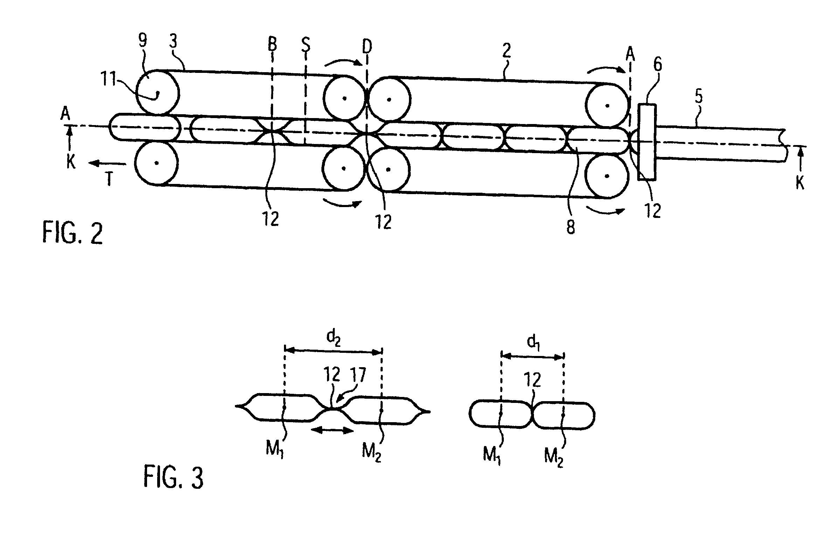

Die Transporteinrichtung 2 ist hier, wie auch aus Fig. 2 hervorgeht, aus gegenüberliegenden Transportmitteln, hier gegenüberliegenden umlaufenden Endlosbändern oder auch Transportketten mit Verdrängerelementen gebildet. Die Bänder laufen jeweils um Umlenkrollen 9, die sich um entsprechende Achsen 11 drehen, wobei die Bänder von jeweils mindestens einer Rolle angetrieben werden. Der Abstand der Bänder ist derart einstellbar, dass Würste mit einem bestimmten Kaliber fest zwischen den Bändern gehalten und in Transportrichtung T transportiert werden können. In Transportrichtung hinter der ersten Transporteinrichtung 2 ist eine zweite Transporteinrichtung 3 vorgesehen. In vorteilhafter Weise ist der Abstand zwischen den Transporteinrichtungen gering und liegt vorzugsweise in einem Bereich von 1 bis 5 mm. Somit können auch kurze Würste sicher von einer Transporteinrichtung zur nächsten übergeben werden. Die zweite Transporteinrichtung 3 ist entsprechend der ersten Transporteinrichtung ausgebildet, wobei jedoch die zweite Transporteinrichtung noch weiter eine Trenneinrichtung 4a,b aufweist zum Trennen von hintereinander angeordneten Würsten an der Abteilstelle 12. In Fig. 2 ist die Trenneinrichtung 4a,b nicht dargestellt. Die Transporteinrichtungen 2, 3 haben vorteilhafterweise getrennte nicht dargestellte Antriebsmotoren und sind getrennt voneinander ansteuerbar.

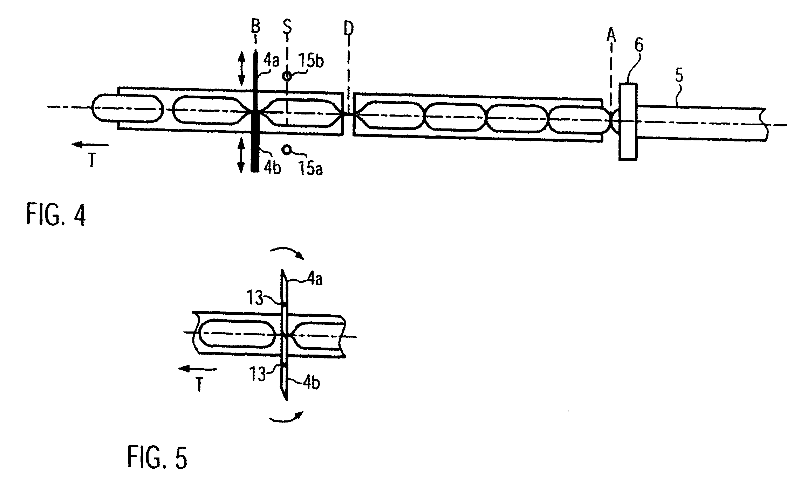

Wie insbesondere aus der Fig. 4 hervorgeht, kann eine entsprechende Trenneinrichtung 4a,b zwei, seitlich zwischen den gegenüberliegenden Bändern angeordnete Trennelemente 4a,b umfassen, die, wie durch die Pfeile in Fig. 4 deutlich wird, aufeinander zu bewegt werden können und die Würste 8 an ihrer Abteilstelle 12 durchtrennen können. Die Trennelemente 4a,b können dabei zwei Klingen oder eine Klinge 4a und einen Gegenhalter 4b aufweisen.

Wie in Fig. 5 dargestellt ist, können die Trennelemente 4a,b auch so ausgebildet sein, dass sie zum Abteilen um eine Achse 13 gedreht werden. Hier umfasst beispielsweise das Trennelement 4a zwei gegenüberliegende Klingen und das Trennelement 4b zwei gegenüberliegende Gegenhaltelemente. Die Gegenhalter dienen während des Schneideprozesses als Gegenhalter für die Klingen.

Ferner weist die Vorrichtung eine Steuereinrichtung 14 auf, die den Füllprozess steuert. Die Steuerung ist so ausgelegt, dass sie die Transporteinrichtungen 2, 3, insbesondere deren Antriebe derart ansteuert, dass die Transportgeschwindigkeit der ersten und zweiten Transporteinrichtung zumindest zeitweise unterschiedlich ist, derart, dass die Abteilstelle 12 zwischen zwei nebeneinander angeordneten Würsten vergrößert wird.

Wie insbesondere aus Fig. 2 hervorgeht, liegen die Würste in einer Wurstkette dicht beieinander. Wie aus Fig. 3 hervorgeht, haben dabei die Mittelpunkte (Mitte in Bezug auf die Länge der Wurst) einen Abstand d1 voneinander. Dadurch, dass die zweite Transporteinrichtung 3 zumindest teilweise schneller läuft, als die erste Transporteinrichtung 2, kann die Abteilstelle 12 zwischen den beiden Transporteinrichtungen auseinandergezogen werden, so dass eine Lücke 17 zwischen den einzelnen Würsten 8 entsteht. Der Abstand d2 zwischen den Mittelpunkten M1 und M2 ist daher größer, als der Abstand d1 vor der Vergrößerung. Insbesondere ist der Abstand d2 um 1 bis 8 mm größer als der Abstand d1. Die Geschwindigkeiten, bzw. die Differenzgeschwindigkeit zwischen den Transporteinrichtungen 2, 3 werden so eingestellt, dass eine entsprechend große Lücke 17 erzeugt werden kann. Somit hat die Trenneinrichtung 4a,b ausreichend Platz zum Durchtrennen der Abteilstelle 12.

Insbesondere bei hoher Füllleistung ist es vorteilhaft, wenn ein Sensor 15 vorgesehen ist, der eine Abteilstelle 12 detektieren kann. Wenn der Detektor 15a,b eine Abteilstelle 12 detektiert, kann er das Ausgangssignal an eine Steuereinheit der Steuerung 14 senden, wobei die Trenneinrichtung 4a,b in Abhängigkeit dieses Signals angesteuert wird, so dass sich die Trennelemente 4a,b genau dann aufeinander zu bewegen, wenn die Abteilstelle 12 sich an der Trennstelle B befindet. Der Sensor ist an einer Stelle S etwa in einem Bereich von 50 bis 400 mm vor der Trenneinrichtung 4a,b angeordnet. Ein solcher Sensor kann beispielsweise zwei Sensorelemente 15a,b aufweisen, die seitlich an der Transporteinrichtung 3 auf einer Höhe der zu transportierenden Würste angeordnet sind. Der Sensor kann beispielsweise ein Infrarotsensor sein mit einer Infrarotlichtquelle 15a und einem gegenüberliegenden Infrarotdetektor 15b. Der Sensor kann jedoch auch beispielsweise als CCD-Kamera oder aber als Laser- oder Rotlichtsensor ausgebildet sein. Wesentlich ist, dass im Bereich S von dem Sensor für einen prall gefüllten Wurstabschnitt ein anderes Signal ausgegeben wird, als für die Abteilstelle 12.

Ein entsprechender Sensor ist jedoch nicht zwingend nötig. Die Position der Abteilstelle kann auch zusätzlich oder alternativ über eine Einheit in der Steuerung 14 auf der Grundlage bekannter Parameter bestimmt werden, wie z.B. Zeitpunkt und Ort A an der die Abteilstelle 12 erzeugt wird, Transportgeschwindigkeit der Transporteinrichtung 2, Transportgeschwindigkeit der Transporteinrichtung 3. Somit kann die Steuerung genau ermitteln, wann die Abteilstelle 12 im Trennbereich B liegt und dann die Trenneinrichtung 4a,b betätigen.

Die Steuerung 14 kann auch eine Einheit umfassen, die genau bestimmen kann, wann die Abteilstelle 12 sich in einem Bereich B zwischen den Transporteinrichtungen 2, 3 befindet. Die Steuereinrichtung 14 kann dies anhand von bekannten Parametern, wie Ort A und Zeitpunkt der Erzeugung der Abteilstelle, sowie Transportgeschwindigkeit der ersten Transporteinrichtung 2 bestimmen. Zusätzlich oder alternativ kann auch ein entsprechender Sensor (nicht dargestellt) vorgesehen sein, der beispielsweise so aufgebaut ist, wie im Zusammenhang mit dem Detektor 15a,b beschrieben wurde. Es ist jedoch auch möglich, die Position der Abteilstelle 12 im Bereich B aufgrund des Signals des Sensors 15a,b zu bestimmen.

Somit kann dann, wenn die Abteilstelle 12 zwischen den Transporteinrichtungen 2, 3 liegt, die Transportgeschwindigkeit der ersten und/oder zweiten Transporteinrichtung entsprechend geändert werden, um die Abteilstelle zu vergrößern.

Nachfolgend wird das erfindungsgemäße Verfahren unter Bezugnahme der Fig. 1 bis 5 näher erläutert.

In bekannter Weise wird pastöse Masse durch das Füllrohr in eine Wursthaut geschoben. Zur Erzeugung einer Wurstkette wird dann eine Abteilstelle 12 im Bereich A zwischen Füllrohrende und erster Transporteinrichtung 2 durch Abdrehen erzeugt.

Es ist jedoch auch möglich, die Abteilstelle 12 nicht durch Abdrehen, sondern z.B. durch Verdrängen der pastösen Masse und Setzen mindestens eines Clips (z.B. Metallclip) mit einer Clipmaschine zu erzeugen.

Die so erzeugte Wurstkette wird über die Transporteinrichtung 2 in Transportrichtung T transportiert, wobei am Ende der Transporteinrichtung 2 die Würste 8 der zweiten Transporteinrichtung 3 übergeben werden. Da die beiden Transporteinrichtungen 2, 3 dicht beieinander liegen, können auch kurze Würste gut übergeben werden und hängen nicht durch. In dem Bereich B zwischen den Transporteinrichtungen 2, 3 wird die Wurstkette nicht gehalten. Läuft nun die zweite Transporteinrichtung 3 schneller als die erste Transporteinrichtung 2, so wird die Abteilstelle 12 in diesem Bereich auseinandergezogen und vergrößert, wie vorher im Zusammenhang mit Fig. 3 beschrieben wurde. Die Geschwindigkeitsdifferenz zwischen den Transporteinrichtungen 2, 3 ist so eingestellt, dass sich die gewünschte Vergrößerung der Lücke 17 ergibt. Dabei kann die Transporteinrichtung 3 z.B. kontinuierlich etwas schneller laufen, als die Transporteinrichtung 2.

Es ist jedoch auch möglich, dass die Transportgeschwindigkeit der zweiten Transporteinrichtung 3 kurzzeitig erhöht und/oder die Transportgeschwindigkeit der ersten Transporteinrichtung 2 kurzzeitig erniedrigt wird. Vorteilhafterweise geschieht dies dann, wenn die Abteilstelle 12 zwischen den Transporteinrichtungen 2, 3 liegt, damit diese Stelle gedehnt werden kann. Die Geschwindigkeitsdifferenz und die Länge der Zeitdauer der Geschwindigkeitsänderung wird so eingestellt, dass die Lücke in der gewünschten Größe erzeugt wird. Nach der Beschleunigung oder Verzögerung können die Transporteinrichtungen 2, 3 wieder mit ihrer vorherigen Geschwindigkeit, z.B. mit gleicher Geschwindigkeit weiterlaufen. Dabei kann es vorteilhaft sein, wenn der Zeitpunkt, zu dem sich die eine Abteilstelle 12 im Bereich B befindet entweder rechnerisch, oder aber über einen Sensor bestimmt wird

Die Wurstkette mit der vergrößerten Abteilstelle 12 wird dann weiter in Transportrichtung T durch die zweite Transporteinrichtung 3 gefördert, bis eine vergrößerte Abteilstelle 12 zu der Trennstelle B gelangt. Der Zeitpunkt, wann eine Abteilstelle 12 in dem Bereich B zu liegen kommt, kann entweder wie zuvor erläutert über die Steuereinrichtung 14 anhand von bekannten Parametern bestimmt bzw. berechnet werden, und/oder aber über einen Sensor 15a,b an der Stelle S ermittelt werden.

Wurde ermittelt, dass eine Abteilstelle im Bereich B liegt, werden die Trennelemente 4a,b der Trenneinrichtung angesteuert und Durchtrennen der Wurstkette an der Abteilstelle 12. Die Einzelwürste werden von der Transporteinrichtung 3 weiter zur Weiterverarbeitung transportiert. Der Vorgang wiederholt sich für nachfolgende Würste bzw. Abteilstellen.

Beim Durchtrennen der Wurstkette an der Abteilstelle 12 werden die Würste sicher von der Transporteinrichtung 3, d.h. durch die gegenüberliegenden Bänder gehalten, so dass es zu keiner Verschiebung der Würste beim Durchtrennen kommt. Auch Darmplatzer können durch die Erfindung wesentlich reduziert werden. Die vorliegende Erfindung ermöglicht das Erhöhen des Fülltempos und somit die effektive Leistung. Beim Trennen sind keine Kollisionsstellen vorhanden, und ein sauberes Trennen und störungsfreies Arbeiten ist möglich.

## Patentansprüche

1. Verfahren zum Trennen einer Wurstkette in Einzelwürste (8) mit folgenden Schritten:
- Transportieren der gefüllten, abgeteilten Würste (8) mit einer ersten Transporteinrichtung (2) und mit einer in Transportrichtung (T) hinter der ersten Transporteinrichtung (2) angeordneten zweiten Transporteinrichtung (3),
- Vergrößern der Abteilstelle (12) zwischen zwei hintereinander angeordneten Würsten (8) dadurch, dass die Transportgeschwindigkeit der zweiten Transporteinrichtung (2, 3) zumindest zeitweise größer ist als die Transportgeschwindigkeit der ersten Transporteinrichtung (2), **gekennzeichnet durch**
- Durchtrennen der Abteilstelle (12) in der zweiten Transporteinrichtung (3).

2. Verfahren nach Anspruch 1, **dadurch gekennzeichnet, dass** die Transportgeschwindigkeit der zweiten Transporteinrichtung (3) kurzzeitig erhöht und/oder die Transportgeschwindigkeit der ersten Transporteinrichtung (2) kurzzeitig erniedrigt wird, insbesondere, wenn die Abteilstelle zwischen den Transporteinrichtungen (2, 3) liegt.

3. Verfahren nach Anspruch 1 oder 2, **dadurch gekennzeichnet, dass** die Abteilstelle (12) derart vergrößert wird, dass der Abstand (d2) der Mittelpunkte (M1, M2) hintereinander liegender Würste (8) um 1 - 8 mm größer ist als der Abstand (d1) vor der Vergrößerung.

4. Verfahren nach mindestens einem der Ansprüche 1-3, **dadurch gekennzeichnet, dass** die Position der Abteilstelle (12) vor der Trennstelle (B) mittels Sensor (15a,b) bestimmt wird.

5. Verfahren nach mindestens einem der Ansprüche 1-4, **dadurch gekennzeichnet, dass** ermittelt wird, wann sich eine Abteilstelle (12) zwischen den Transportmitteln (2, 3) befindet und dann die Transportgeschwindigkeit der ersten und/oder der zweiten Transporteinrichtung (2, 3) entsprechend verändert wird.

6. Vorrichtung (1) zum Durchführen des Verfahrens nach Anspruch 1 mit
- einer ersten Transporteinrichtung (2) für die Würste (8),
- einer in Transportrichtung (T) hinter der ersten Transporteinrichtung (2) angeordneten zweiten Transporteinrichtung (3), sowie
- einer Trenneinrichtung (4a, b) zum Trennen von zwei nebeneinander angeordneten Würsten (8) an der Abteilstelle (12),
**dadurch gekennzeichnet, dass** die Trenneinrichtung (4a, b) in der zweiten Transporteinrichtung (3) angeordnet ist.

7. Vorrichtung (1) nach Anspruch 6, **dadurch gekennzeichnet, dass** die Vorrichtung (1) weiter eine Steuerung (14) umfasst, die die Transporteinrichtungen (2, 3) derart ansteuert, dass die Transportgeschwindigkeit der ersten und zweiten Transporteinrichtung (2, 3) zumindest zeitweise unterschiedlich ist, derart, dass die Abteilstelle (12) zwischen zwei nebeneinander angeordneten Würsten (8) vergrößert wird.

8. Vorrichtung (1) nach Anspruch 1 oder 2, **dadurch gekennzeichnet, dass** die erste und zweite Transporteinrichtung (2, 3) jeweils gegenüberliegende umlaufende Transportmittel, insbesondere gegenüberliegende umlaufende Bänder umfasst.

9. Vorrichtung (1) nach mindestens einem der Ansprüche 7-8, **dadurch gekennzeichnet, dass** in einem Bereich (S) vor der Trenneinrichtung (4a, b), insbesondere in einem Bereich von 50 bis 400 mm vor der Trenneinrichtung (4a, b) ein Sensor (15) angeordnet ist, der eine Abteilstelle (12) detektieren kann.

10. Vorrichtung (1) nach mindestens einem der Ansprüche 7-9, **dadurch gekennzeichnet, dass** der Abstand zwischen den beiden Transporteinrichtungen (2, 3) in einem Bereich von 1 bis 5 mm liegt.

11. Vorrichtung (1) nach mindestens Anspruch 7, **dadurch gekennzeichnet, dass** die Steuereinrichtung (14) die Geschwindigkeit der zweiten Transporteinrichtung (3) kurzzeitig erhöht und/oder die Geschwindigkeit der ersten Transporteinrichtung (2) kurzzeitig erniedrigt, insbesondere, wenn eine Abteilstelle (12) zwischen den Transporteinrichtungen (2, 3) liegt.

12. Vorrichtung (1) nach mindestens einem der Ansprüche 7-11, **dadurch gekennzeichnet, dass** die Steuereinrichtung (14) eine Einheit umfasst, die erfasst, wenn eine Abteilstelle (12) zwischen den Transporteinrichtungen (2, 3) liegt.

## Claims

1. Method for separating a sausage chain into single sausages (8), comprising the following steps of:
- transporting the filled, portioned sausages (8) using a first transport device (2) and using a second transport device (3) arranged behind the first transport device (2) in the transport direction (T),
- enlarging the portioning point (12) between two consecutively arranged sausages (8) in that the transport speed of the second transport device (2, 3) is at least intermittently greater than the transport speed of the first transport device (2), **characterised by**
- separating the portioning point (12) in the second transport device (3).

2. Method according to claim 1, **characterised in that** the transport speed of the second transport device (3) is briefly increased and/or the transport speed of the first transport device (2) is briefly reduced, more particularly if the portioning point is positioned between the transport devices (2, 3).

3. Method according to either claim 1 or claim 2, **characterised in that** the portioning point (12) is enlarged such that the spacing (d2) of the centre points (M1, M2) of consecutively positioned sausages (8) is 1-8 mm larger than the spacing (d1) before the enlargement.

4. Method according to at least one of claims 1 to 3, **characterised in that** the position of the portioning point (12) is determined before the separating point (B) by means of a sensor (15a, b).

5. Method according to at least one of claims 1 to 4, **characterised in that** it is determined when a portioning point (12) is located between the transport means (2, 3), and then the transport speed of the first and/or the second transport device (2, 3) is appropriately changed.

6. Apparatus (1) for implementing the method according to claim 1, comprising:
- a first transport device (2) for the sausages (8),
- a second transport device (3) arranged behind the first transport device (2) in the transport direction (T), and
- a separating device (4a, b) for separating two consecutively arranged sausages (8) at the portioning point (12),
- **characterised in that** the separating device (4a, b) is arranged in the second transport device (3).

7. Apparatus (1) according to claim 6, **characterised in that** the apparatus (1) further comprises a controller (14), which controls the transport devices (2, 3) such that the transport speed of the first and the second transport device (2, 3) is at least intermittently different, whereby the portioning point (12) between two consecutively arranged sausages (8) is enlarged.

8. Apparatus (1) according to either claim 1 or claim 2, **characterised in that** the first and second transport devices (2, 3) each comprise opposing circulating transport means, more particularly opposing circulating belts.

9. Apparatus (1) according to at least one of claims 7 or 8, **characterised in that** a sensor (15), which can detect a portioning point (12), is arranged in a region (S) before the separating device (4a, b), more particularly in a region of from 50 to 400 mm before the separating device (4a, b).

10. Apparatus (1) according to at least one of claims 7 to 9, **characterised in that** the spacing between the two transport devices (2, 3) is in a range of from 1 to 5 mm.

11. Apparatus (1) according to at least claim 7, **characterised in that** the controller (14) briefly increases the speed of the second transport device (3) and/or briefly reduces the speed of the first transport device (2), more particularly if a portioning point (12) is positioned between the transport devices (2, 3).

12. Apparatus (1) according to at least one of claims 7 to 11, **characterised in that** the controller (14) comprises a unit which determines when a portioning point (12) is positioned between the first and second transport devices (2, 3).

## Revendications

1. Procédé de découpe d'un chapelet de saucisses en saucisses individuelles (8), comprenant les étampes :
- de transport des saucisses remplies et séparées (8) à l'aide d'un premier dispositif de transport (2) et à l'aide d'un deuxième dispositif de transport (3) agencé selon la direction de transport (T) derrière le premier dispositif de transport (2),
- d'allongement du point de séparation (12) entre deux saucisses agencées l'une derrière l'autre (8) du fait que la vitesse de transport du deuxième dispositif de transport (2, 3) est au moins temporairement supérieure à la vitesse de transport du premier dispositif de transport (2), **caractérisé par**
- le sectionnement du point de séparation (12) sur le deuxième dispositif de transport (3).

2. Procédé selon la revendication 1, **caractérisé en ce que** la vitesse de transport du deuxième dispositif de transport (3) est brièvement augmentée et/ou **en ce que** la vitesse de transport du premier dispositif de transport (2) est brièvement réduite, en particulier lorsque le point de séparation se trouve entre les dispositifs de transport (2, 3).

3. Procédé selon la revendication 1 ou 2, **caractérisé en ce que** le point de séparation (12) est allongé de telle sorte que la distance (d2) entre les points médians (M1, M2) de saucisses se trouvant l'une derrière l'autre (8) est supérieure de 1 à 8 mm à la distance (d1) avant l'allongement.

4. Procédé selon au moins l'une des revendications 1 à 3, **caractérisé en ce que** la position du point de séparation (12) avant le point de découpe (B) est déterminée à l'aide d'un capteur (15a,b).

5. Procédé selon au moins l'une des revendications 1 à 4, **caractérisé en ce qu'**il est déterminé quand un point de séparation (12) se trouve entre les moyens de transport (2, 3) et **en ce que** la vitesse de transport des premier et/ou deuxième dispositifs de transport (2, 3) est alors modifiée en conséquence.

6. Dispositif (1) de mise en oeuvre du procédé selon la revendication 1, comprenant
- un premier dispositif de transport (2) pour les saucisses (8),
- un deuxième dispositif de transport (3) agencé selon la direction de transport (T) derrière le premier dispositif de transport (2), et
- un dispositif de découpe (4a, b) pour découper deux saucisses adjacentes (8) au point de séparation (12),
**caractérisé en ce que** le dispositif de découpe (4a, b) est agencé dans le deuxième dispositif de transport (3).

7. Dispositif (1) selon la revendication 6, **caractérisé en ce que** le dispositif (1) comporte en outre une commande (14) qui commande les dispositifs de transport (2, 3) de telle sorte que les vitesses de transport des premier et deuxième dispositifs de transport (2, 3) diffèrent au moins temporairement, de telle manière que le point de séparation (12) est allongé entre deux saucisses adjacentes (8).

8. Dispositif (1) selon la revendication 1 ou 2, **caractérisé en ce que** les premier et deuxième dispositifs de transport (2, 3) comportent chacun des moyens de transport rotatifs opposés, en particulier des bandes rotatives opposées.

9. Dispositif (1) selon au moins l'une des revendications 7 ou 8, **caractérisé en ce qu'**un capteur (15) capable de détecter un point de séparation (12) est agencé dans une plage (S) devant le dispositif de découpe (4a, b), en particulier dans une plage de 50 à 400 mm avant le dispositif de découpe (4a, b).

10. Dispositif (1) selon au moins l'une des revendications 7 à 9, **caractérisé en ce que** la distance entre les deux dispositifs de transport (2, 3) est comprise dans une plage de 1 à 5 mm.

11. Dispositif (1) selon au moins la revendication 7, **caractérisé en ce que** le dispositif de commande (14) augmente brièvement la vitesse du deuxième dispositif de transport (3) et/ou réduit brièvement la vitesse du premier dispositif de transport (2), en particulier lorsqu'un point de séparation (12) se trouve entre les dispositifs de transport (2, 3).

12. Dispositif (1) selon au moins l'une des revendications 7 à 11, **caractérisé en ce que** le dispositif de commande (14) comporte une unité qui détermine quand un point de séparation (12) se trouve entre les dispositifs de transport (2, 3).
